# EUROPEAN PATENT SPECIFICATION

(11) **EP 1 726 616 B1**
(45) Date of publication and mention of the grant of the patent: **09.11.2016**
(21) Application number: 05720716.9
(22) Date of filing: 14.03.2005
(51) Int. Cl.: C08L 9/06, C08K 3/04, C08K 3/36, C08L 7/00

(54) **RUBBER COMPOSITION AND PNEUMATIC TIRE USING SAME**
KAUTSCHUKZUSAMMENSETZUNG UND LUFTREIFEN DAMIT
MÉLANGE CAOUTCHOUTÉ ET BANDAGE PNEUMATIQUE UTILISANT LE MÊME

(30) Priority: 16.03.2004 JP 2004074191; 07.02.2005 JP 2005030510
(43) Date of publication of application: 29.11.2006
(73) Proprietor: Bridgestone Corporation, Tokyo 104-8340 (JP)
(72) Inventor: MASAKI, Koji, BRIDGESTONE CORPORATION, Kodaira-shi, Tokyo 1878531 (JP)
(74) Representative: Oxley, Robin John George
(86) International application number: PCT/JP2005/004448
(87) International publication number: WO 2005/087858

(56) References cited:
- JP-A- 1 197 541
- JP-A- 4 359 938
- JP-A- 5 311 006
- JP-A- 57 200 430
- JP-A- 61 203 145
- JP-A- 2003 253 051

## Description

### TECHNICAL FIELD

This invention relates to a rubber composition containing an aromatic vinyl compound-diene compound copolymer and a pneumatic tire using such a rubber composition in a ground contact part of a tread portion.

### RELATED ART

At the present time, liquid styrene-butadiene copolymer rubber (hereinafter may be referred to as "SBR" simply) having mainly a molecular weight of about 10,000 is widely used (see, for example, Patent Article 1). Also, the liquid SBR is used for the wear resistance (see, for example, Patent Article 2). As a technique of improving the storage modulus, there is the compounding of polyethylene glycol polymaleate (PEGM) (see, for example, Patent Article 3). JP57200430 teaches a rubber composition produced by blending two kinds of styrene/butadiene copolymer rubbers composed of low-molecular and high-molecular weights and carbon black. JP5311006 discloses a rubber composition comprising 5-40 weight % of a vinylaromatic compound-diene compound copolymer with a weight average molecular weight of 2,000-50,000 and 95-60 weight % diene rubber. JP4359938 teaches a rubber composition prepared by compounding 100 parts by weight of a rubber containing two different styrene-butadiene copolymer rubbers, carbon black and an extender oil. JP2003253051 teaches a rubber composition obtained by compounding a styrene/butadiene copolymer and a hydrogenated styrene/butadiene copolymer and a resin.
Patent Article 1: JP-A-61-203145
Patent Article 2: JP-A-H01-197541
Patent Article 3: JP-A-2003-176378

### DISCLOSURE OF THE INVENTION

### PROBLEMS TO BE SOLVED BY T HE INVENTION

The inventor has found that the conventional compounding technique is insufficient in the workability such as processing or the like of rubber composition, and the storage modulus and loss factor of the rubber composition.

It is, therefore, an object of the invention to provide a rubber composition having a high storage modulus and a low loss factor without damaging the workability such as compounding, milling, processing or the like.

It is another object of the invention to provide a rubber composition having a high storage modulus and a low loss factor without damaging the workability such as compounding, milling, processing or the like and stably providing an improvement of fracture strength.

### MEANS FOR SOLVING PROBLEMS

The invention is concerned with a rubber composition characterized by containing a liquid aromatic vinyl compound-diene compound copolymer (B) having a weight average molecular weight of more than 50,000 but not more than 300,000 (conversion to polystyrene through gel permeation chromatography) based on 100 parts by mass of a rubber component (A) comprising at least one rubber of natural rubber and synthetic diene-based rubbers in which the copolymer (B) comprises 5-80 mass% of the aromatic vinyl compound and a vinyl bond content in diene compound portion is 10-80 mass%; the rubber composition containing a softening agent and a total amount of the copolymer (B) and the softening agent is 5-60 parts by mass based on 100 parts by mass of the rubber component (A). The invention also provides a pneumatic tire using such a rubber composition.

The inventor has variously examined the conventional compounding means for solving the above problems. In this regard, the inventor has found that in the compounding means described in Patent Article 1, the amount of carbon black (hereinafter abbreviated to as "C/B") is increased and hence not only G' (storage modulus) but also tan δ (loss factor) are increased to cause the Mooney viscosity (hereinafter abbreviated to as "ML") of the compounding mass and the processability is deteriorated.

Also, the inventor has found that in the rubber composition having a styrene composition distribution in SBR as a high molecular weight matrix through an increment process as disclosed in Patent Article 2, the composition has a tapered structure and such a matrix polymer has a broad tan δ temperature dispersion and the loss factor becomes insufficient. Moreover, it has been found that when a liquid emulsion-polymerized SBR is combined as described in patent Article 2, it is disadvantageous in the loss factor because such a SBR tends to have a broad molecular weight distribution.

Further, the inventor has found that the compounding of PEGM described in Patent Article 3 increases G' but is lacking in the improving the loss factor because tan δ is on a level with the above.

The inventor has thought that the compounding described the above patent articles is insufficient in the improvement of the loss factor, made the examination of the tire tread compounding under the above knowledge, examined aromatic vinyl compound-diene compound copolymers having various molecular structures, and found that the improvements of the storage modulus and the loss factor can be established by using a copolymer having a relatively high molecular weight (about 100,000) and a given molecular structure without damaging the workability, and as a result, the invention has been accomplished.

Also, the inventor has found that the matrix having an excellent compatibility in the above rubber composition enhances the fracture strength of the rubber composition and brings about the excellent storage modulus and the stability in the improvement of the loss factor.

The above rubber composition is possible to establish and improve high G' and low tan δ in a pneumatic tire and can be general-purpose and high performance tread compounding for a passenger car tire (PSR) using a liquid SBR having a relatively high molecular weight. However, if the matrix becomes non-compatible, there is a possibility of lowering the fracture strength (which may be referred to as "TB" hereinafter).

Under the above knowledge, the inventor has made further examinations on the microscopically molecular structure of the matrix for providing the stable compatibility in detail. Although there are considered various means for enhancing the compatibility, the utility of the rubber composition can be enhanced by examining the microstructures of the matrix and the liquid copolymer without essentially changing the construction of the rubber composition.

As a result, the inventor has found out that in a rubber composition comprising a rubber component (A) containing a copolymer (C) having predetermined aromatic vinyl compound content and vinyl bond content and a given copolymer (B) such as a liquid SBR, the compatibility between the rubber component (A) as a matrix and the copolymer (B) can be enhanced by making a difference in the aromatic vinyl compound content between the copolymer (C) and the copolymer (B) to not more than 30 mass%, and the invention has been accomplished.

### EFFECT OF THE INVENTION

According to the invention, the storage modulus and loss factor can be considerably improved without the damage of the workability by compounding the aromatic vinyl compound-diene compound copolymer having a predetermined molecular structure instead of a usual softening agent such as aromatic oil.

Also, according to an aspect of the invention, the predetermined copolymer (C) and the predetermined copolymer (B) are used by making the difference in the aromatic vinyl compound content between the copolymer (C) and the copolymer (B) to not more than 30 mass%, whereby the compatibility between the rubber component (A) as a matrix and the copolymer (B) is ensured and the improvement of TB, G' and tan δ can be stably obtained.

### BEST MODE FOR CARRYING OUT THE INVENTION

### (1) Rubber composition

It comprises 5-60 parts by mass of a total amount of the predetermined copolymer (B) and a softening agent based on 100 parts by mass of a rubber component (A).

### (2) Rubber component (A)

The rubber component comprises at least one rubber of natural rubber and synthetic diene-based rubbers. Although various ones are applicable, emulsion-polymerized or solution-polymerized rubber is preferable. Also, a glass transition temperature Tg is preferable to be not lower than -60°C in view of the wear resistance, heat resistance and the like.

As the synthetic diene-based rubber may be mentioned cis-1,4-polyisoprene, styrene-butadiene copolymer, low cis-1,4-polybutadiene, high cis-1,4-polybutadiene, ethylene-propylene-diene copolymer, chloroprene, halogenated butyl rubber, acrylonitrile-butadiene rubber and the like. The natural rubber and synthetic diene-based rubbers may be used alone or in a blend thereof.

The preferable rubber component (A) is natural rubber, cis-1,4-polyisoprene, SBR and polybutadiene. Moreover, it is preferable that not less than 50 mass% of SBR is included in the rubber component (A) in a point that the improving effect by a combination with the predetermined copolymer (B) is clear.

Preferably, the rubber component (A) contains not less than 50 mass% of styrene-butadiene copolymer (C) having a weight average molecular weight of 300,000-1,500,000. Also, the copolymer (C) is preferable to comprise 20-60 mass% of an aromatic vinyl compound and have a vinyl bond content in diene compound portion of 10-80 mass%. Such a rubber component (A) can ensure the compatibility within a given range and provides stably the improvement of TB, G' and tan δ. Moreover, a rubber component compounded with bismaleimide (BMI) (JP-A-2001-131343) increases G' though it does not contain the predetermined copolymer (B), but tan δ is the same and the improving effect of the loss factor is lacking, and also the compatibility with the copolymer (B) does not come into problem.

Preferably, the copolymer (C) is an emulsion-polymerized styrene-buitadiene copolymer comprising not less than 20 mass% of an aromatic vinyl compound, or a solution-polymerized styrene-butadiene copolymer comprising not less than 20 mass% of an aromatic vinyl compound and having not less than 10 mass% of a vinyl bond content in diene compound portion.

### (2) Aromatic vinyl compound-diene compound copolymer (B)

It is a copolymerized compound of an aromatic vinyl compound and a diene compound as a monomer. It has a weight average molecular weight of 50,000-300,000 (conversion to polystyrene through a gel permeation chromatography). The copolymer (B) comprises 5-80 mass% of an aromatic vinyl compound and has a vinyl bond content in diene compound portion of 10-80 mass%.

The copolymer (B) has a weight average molecular weight of 50,000-300,000, preferably a weight average molecular weight of 50,000-200,000, more preferably 50,000-150,000. As the molecular weight becomes further higher, the storage modulus and loss factor become excellent, but the workability lowers at the molecular weight of more than 150,000 or 200,000. Also, the molecular weight distribution is preferable to be narrow. If it is wide, the loss factor tends to be deteriorated.

The copolymers comprising less than 5 mass% or more than 80 mass% of the aromatic vinyl compound and the diene compound having a vinyl bond content of less than 10 mass% or more than 80 mass% are insufficient in the desired workability and the establishment between the storage modulus and the loss factor. Moreover, the vinyl bond content used herein means the amount of vinyl bond in the constitutional unit inherent to the diene compound and shows a ratio of vinyl bond content occupied in the amount of all bonds including other bonds represented by cis bond and trans bond.

As the aromatic vinyl compound are mentioned styrene, p-methylstyrene, m-methylstyrene, p-tert-butylstyrene, α-methylstyrene, chloromethylstyrene, vinyltoluene and the like. Preferably, styrene, p-methylstyrene and α-methylstyrene are mentioned. Particularly, styrene is preferable.

As the diene compound are used butadiene, isoprene, pentadiene, 2,3-dimethyl butadiene and the like. Particularly, butadiene is preferable.

Preferably, the copolymer (B) has a weight average molecular weight of 50,000-200,000. Also, the copolymer (B) is preferable to comprise 10-70 mass% of the aromatic vinyl compound. Further, it is preferable that the difference in the aromatic vinyl compound content between the copolymer (C) and the copolymer (B) is not more than 30 mass%. When the difference in the aromatic vinyl compound content exceeds 30 mass%, there is a possibility that the compatibility easily lowers and the sufficient fracture strength is not obtained.

The copolymer (B) can be obtained by various production methods as far as the predetermined molecular structure is provided. As the copolymer (B) are applicable various liquid polymers, but the copolymer is preferably produced by solution polymerization of styrene and butadiene. Particularly, the copolymer (B) is preferable to be a solution-polymerized styrene-butadiene copolymer rubber.

As an industrial example of the above method, there is a method of copolymerizing given monomers in a hydrocarbon solvent using an organolithium compound as an initiator. For example, the copolymer (B) can be obtained by copolymerizing a diene compound such as 1,3-butadiene containing a small amount of 1,2-butadiene with an aromatic vinyl compound in a hydrocarbon solvent using an organolithium compound initiator in the presence of ether or a tertiary amine in a tank-type or tower-type reaction vessel.

Although the liquid SBR having a molecular weight of 5,000-200,000 or 5,000-300,000 is known (see the above Patent Article 2), it is not clear that such a SBR is made possible to establish the storage modulus and the loss factor as defined in the invention different from the copolymer (B) defined by the predetermined molecular structure according to the invention. The known liquid SBR (see Patent Article 2) is formed by the emulsion polymerization in which a broad molecular weight distribution is generally formed different from the copolymer (B) defined by the predetermined molecular structure according to the invention. When the rubber composition compounded with this SBR (see Patent Article 2) is used to form a tire, the loss factor is disadvantageously acted to deteriorate the low fuel consumption. In the invention, the problem on the low fuel consumption can be solved by the predetermined molecular structure of the copolymer (B) and the like.

Also, there is known a high molecular weight SBR matrix having a tapered structure of a styrene composition distribution through an increment process (see Patent Article 2). However, such a matrix has a broad tan δ temperature dispersion, so that when such a matrix is used in the rubber composition (see Patent Article 2), the loss factor is poor. In the invention, the problem on the loss factor can be solved by using the copolymer (B) defined by the predetermined molecular structure in a given amount, or the like.

### (3) Filler

The rubber composition may further contain various fillers. As the filler is used at least one of C/B, silica, calcium carbonate, titanium oxide and the like, and at least one of C/B and silica is preferable.

The filler may be included in an amount of 30-90 parts by mass based on 100 parts by mass of the rubber component (A). When the amount is less than 30 parts by mass, the fracture properties, wear resistance and the like of the vulcanizate are not sufficient, while when it exceeds 90 parts by mass, the operability and the like are not favorable. An example of C/B used as the filler includes classes of FEF, HAF, ISAF, SAF and the like. Among them, ISAF-HAF class or SAF-HAF class is particularly preferable. In case of using C/B with silica, the compounding ratio may be arbitrarily changed in accordance with the compounding purpose.

### (4) Softening agent

The rubber composition contains various softening agents. As the softening agent can be used at least one of process oils such as paraffinic oil, naphthenic oil, aromatic oil and the like. The aromatic oil is preferable in applications emphasizing the fracture properties and wear resistance, and the naphthenic oil or paraffininc oil is preferable in applications emphasizing the low heat buildup and low temperature properties.

The total amount of the copolymer (B) and the softening agent is 5-60 parts by mass based on 100 parts by mass of the rubber component (A). When it exceeds 60 parts by mass, there is a tendency of deteriorating the fracture properties of the vulcanizate.

### (5) Other additives

In addition to the above rubber component (A), copolymer (B) and the filler, the rubber composition may be compounded with other additives usually used in the rubber industry such as silane coupling agent, curing agent, vulcanization accelerator, accelerator activator, antioxidant, antiozonant, age resistor, process oil, zinc oxide, stearic acid and the like, if necessary.

As the curing agent are mentioned sulfur and the like. The amount of the curing agent used is 0.1-10 parts by mass, preferably 0.5-5 parts by mass as a sulfur content based on 100 parts by mass of the rubber component (A). When the amount is less than 0.1 part by mass, the fracture properties and wear resistance of the cured rubber lower, while when it exceeds 10 parts by mass, the rubbery elasticity tends to be lost.

### (6) Pneumatic tire

The above rubber composition can be used in a pneumatic tire, particularly in a tire tread portion, preferably in at least ground contact part of the tread portion.

Although the liquid SBR having mainly a molecular weight of 10,000 is applied at the present day (see Patent Article 1), it is not clear that such a SBR is made possible to establish the storage modulus and the loss factor as defined in the invention different from the copolymer (B) defined by the predetermined molecular structure according to the invention. The rubber composition according to the invention enlarges the application range of the conventional technique by using the liquid copolymer (B) having the predetermined molecular structure and a relatively high molecular weight (50,000-300,000). That is, according to the invention, the predetermined copolymer (B) can be applied to the tire tread compounding, whereby the high storage modulus (high G') and the low loss factor (low tan δ) can be established without damaging the operability as the rubber composition.

In order to distinguish the rubber composition over the compounding of the liquid SBR (2,000-50,000) (C/B 100 parts by mass, softening agent 100 parts by mass)(see Patent Article 1), not only the predetermined copolymer (B) is used as mentioned above, but also the tire tread compounding (30-90 parts by mass of C/B of ISAF and HAF class or SAF-HAF class (silica may be included) can be added) is used, and it is possible to add 5-80 parts by mass of softening agent + predetermined copolymer (B).

As the technique relating to the improvement of G' is already known the PEGM compounding (Patent Article 3), but the invention can apply this technique. As a technique capable of simultaneously improving the storage modulus and loss factor without damaging the operability, the predetermined copolymer (B) can be compounded.

### EXAMPLES

The invention is explained in detail with reference to the following examples.

### (Comparative Example 1)

A rubber composition is prepared according to a compounding of a tread portion shown in Table 1 by using a copolymer (B) shown in Table 2, and then vulcanized according to the production conditions of a pneumatic tire. In this example, the copolymer (B) is SBR having a weight average molecular weight of 25,000 and comprises 25 mass% of styrene and has a vinyl bond content in butadiene portion of 65 mass% as shown in Tables 1 and 2. Such a SBR is included in an amount of 30 parts by mass based on 100 parts by mass of a rubber component (SBR 1500: made by JSR Corporation). Moreover, 65 pasrt by mass of C/B of ISAF class as a filler is used.

### (Comparative Example 2 and Reference Examples 1 and 2)

A rubber composition is prepared and cured in the same manner as in Comparative Example 1 except that the weight average molecular weight of the copolymer (B) in Comparative Example 1 is changed into 40,000 (Comparative Example 2), 80,000 (Reference Example 1) and 120,000 (Reference Example 2), respectively.

For example, the liquid copolymer having a weight average molecular weight of 80,000 can be produced as follows.

Into a pressure glass vessel of 800 mL dried and purged with nitrogen are charged a cyclohexane solution of butadiene (16%) and a cyclohexane solution of styrene (21%) so as to be 40 g of butadiene monomer and 10 g of styrene monomer, and 0.66 millimol of 2,2-ditetrahydrofuryl propane is charged thereinto, and 1.32 millimol of n-butyllithium (BuLi) is added thereto, and thereafter the polymerization is carried out in a warm bath at 50°C for 1.5 hours. The polymerization conversion is approximately 100%.

Then, 0.5 mL of a solution of 5 wt% of 2,6-di-t-butyl-p-cresol (BHT) in isopropanol is further added to the polymerization system to stop the reaction. Thereafter, the reaction mass is dried according to the usual manner to obtain a polymer.

### (Comparative Example 3)

A rubber composition is prepared and cured in the same manner as in Comparative Example 1 except that an aromatic oil being a usual softening agent is used instead of the copolymer (B) in Comparative Example 1 as shown in Table 2.

### (Comparative Examples 4 and 5)

A rubber composition is prepared and cured in the same manner as in Comparative Example 1 except that the weight average molecular weight of the copolymer in Comparative Example 1 is changed into 4,000 (Comparative Example 4) and 320,000 (Comparative Example 5), respectively.

### (Evaluation)

With respect to the rubber compositions of Reference Examples 1-2 and Comparative Examples 1-5 are evaluated the processability, storage modulus and loss factor. The results are also shown in Table 2.

The processability is evaluated by an index on the basis that Comparative Example 3 is 100 by measuring a Mooney viscosity (ML₁₊₄/130°C) of the rubber composition at 130°C according to JIS K6300-1994. The smaller the index value, the better the processability.

The storage modulus and loss factor are evaluated by an index on the basis that Comparative Example 3 is 100 by measuring G' value and tan δ by means of a low heat-buildup viscoelasticity measuring apparatus (made by Rheometrix Corp.) under conditions that a temperature is 50°C and a strain is 5% and a frequency is 15 Hz.

**(Table 1)**

| Compounding | parts by mass |
|---|---|
| SBR^{*1} | 100 |
| C/B ^{*2} | 65 |
| Stearic acid | 2 |
| Zinc oxide | 3 |
| Antioxidant ^{*3} | 1 |
| Vulcanization accelerator ^{*4} | 0.4 |
| Vulcanization accelerator ^{*5} | 1 |
| Sulfur | 1.75 |
| Copolymer (B) | 30 |

| | |
|---|---|
| *1: SBR 1500 (made by JSR Corporation) *2: ISAF, Seast 3H, made by Tokai Carbon Co., Ltd. *3: Nocrac 6C *4: Nocceler D *5: Nocceler NS | |

**(Table 2)**

| | | Comparative Example 1 | Comparative Example 2 | Reference Example 1 | Reference Example 2 | Comparative Example 3 | Comparative Example 4 | Comparative Example 5 |
|---|---|---|---|---|---|---|---|---|
| Copolymer (B) | kind | SBR | SBR | SBR | SBR | (aromatic oil) | SBR | SBR |
| | StNi | 25/65 | 25/65 | 25/65 | 25/65 | - | 25/64 | 25/65 |
| | Molecular weight (x10³) | 25 | 40 | 80 | 120 | - | 4 | 320 |
| (1) Processability | ML1+4 (index) | 87 | 90 | 97 | 102 | 100 | 85 | 130 |
| (2) Storage modulus | G' (index) | 107 | 113 | 118 | 125 | 100 | 97 | 118 |
| (3) Loss factor | tan δ (index) | 95 | 90 | 82 | 77 | 100 | 98 | 78 |

As shown in Table 2, the rubber compositions of Reference Examples 1-2 can sufficiently satisfy all of the processability, storage modulus and loss factor though the processability of Reference Example 2 is slightly poor as compared with that of Comparative Example 1 but is substantially comparable therewith. On the other hand, the insufficient performances are clearly observed in the rubber compositions of Comparative Examples 3-5.

### (Reference Examples 3-5)

A good compatible rubber composition is prepared in a tread compounding.

A copolymer (B), SBR [the same as in Example 1, weight average molecular weight: 80,000 (styrene content (St)/vinyl bond content (Vi) = 25 mass%/65 mass%)] is included in an amount of 15 parts by mass based on 100 parts by mass of SBR as a rubber component (A) [Reference Example 3: the same #1500 as in Reference Examples 1-2, made by JSR Corporation, (emulsion-polymerized SBR, weight average molecular weight: 450,000) (St/Vi = 23.5 mass%/18 mass%), and Reference Example 4: #0202 made by JSR Corporation, (emulsion-polymerized SBR, weight average molecular weight: 450,000)(St/Vi = 45.0 mass%/18 mass%)].

Also, as a rubber component (A) of Reference Example 5 is used SBR* (St/Vi = 25/60) prepared as follows, and the copolymer (B) is included in the same manner as in Reference Example 3.

Into a pressure glass vessel of 800 mL dried and purged with nitrogen are charged a cyclohexane solution of butadiene (16%) and a cyclohexane solution of styrene (21 %) so as to so as to be 40 g of butadiene monomer and 10 g of styrene monomer, and 0.12 millimol of 2,2-ditetrahydrofuryl propane is charged thereinto, and 0.24 millimol of n-butyllithium (BuLi) is added thereto, and thereafter the polymerization is carried out in a warm bath at 50°C for 1.5 hours. The polymerization conversion is approximately 100%.

Then, 0.5 mL of a solution of 5 wt% of 2,6-di-t-butyl-p-cresol (BHT) in isopropanol is further added to the polymerization system to stop the reaction. Thereafter, the reaction mass is dried according to the usual manner to obtain a polymer.

A master batch is prepared by compounding the above composition with 27 parts by mass of C/B [made by Tokai Carbon Co., Ltd. HAF class, trade name Seast KH (N339)], 27 parts by mass of silica (made by Nippon Silica Kogyo Co., Ltd. trade name: Nipsil AQ), 2.5 parts by mass of a coupling agent (made by Degussa, a mixture of trade name: Si69, bis(3-triethoxysilylpropyl) tetrasulfide (average number of S: 3.8) or trade name: Si75, bis(3-triethoxysilylpropyl) polysulfide having an average number of S of 2.4 in one molecule), 2 parts by mass of stearic acid and 1 part by mass of an antioxidant 6C (N-(1,3-dimethylbutyl)-N'-phenyl-p-phenylene diamine), and further 3 parts by mass of zinc oxide, 0.8 part by mass of a vulcanization accelerator DPG (diphenyl guanidine), 1 part by mass of a vulcanization accelerator NS (N-t-butyl-2-benzothiazyl sulfenamide) and 1.5 parts by mass of sulfur are compounded to prepare a rubber composition. The rubber composition is cured at 160° for 15 minutes, and then the properties of the cured rubber are measured.

### (Comparative Example 6)

A rubber composition is prepared and cured in the same manner as in Example 3 except that the copolymer (B) of Reference Example 3 is replaced with an aromatic oil.

### (Comparative Example 7)

A rubber composition is prepared and cured in the same manner as in Example 4 except that the copolymer (B) of Reference Example 4 is replaced with an aromatic oil.

### (Comparative Example 8)

A rubber composition is prepared and cured in the same manner as in Example 5 except that the copolymer (B) of Reference Example 5 is replaced with an aromatic oil. The properties are measured.

### (Evaluation)

With respect to the rubber compositions of Reference Examples 3-5 and Comparative Examples 6-8, the properties of the cured rubber are measured in the same manner as in Comparative Example 1. The results are shown in Table 3.

As to the properties, the fracture strength (TB) is measured instead of the processability in Reference Examples 1-2, and the storage modulus (G') and loss factor (tan δ) are evaluated in the same manner as in Comparative Example 1. They are evaluated by an index on the basis that Comparative Example 6, in which the larger the index value of the storage modulus, the better the steering stability and the smaller the index value of the loss factor, the better the low fuel consumption.

The fracture strength (TB) is measured according to JIS K6301-1995. It is evaluated by an index on the basis that Comparative Example 6 is 100. The larger the index value, the better the fracture strength.

**(Table 3)**

| | Reference Example 3 | Reference Example 4 | Reference Example 5 | Comparative Example 6 | Comparative Example 7 | Comparative Example 8 |
|---|---|---|---|---|---|---|
| Copolymer (C) | #1500 | #0202 | SBR* | #1500 | #0202 | SBR* |
| Copolymer | SBR | SBR | SBR | (aromaticoil) | (aromaticoil) | (aromaticoil) |
| (B) | 25/65 | 25/65 | 25/65 | - | - | - |
| St/Vi Molecular weight (x10³) | 80 | 80 | 80 | - | - | - |
| TB (index) | 113 | 120 | 125 | 100 | 104 | 103 |
| G' (index) | 120 | 128 | 130 | 100 | 107 | 109 |
| tan δ @50°C (index) | 90 | 89 | 82 | 100 | 105 | 95 |

As shown in Table 3, the rubber compositions of Reference Examples 3-5 can sufficiently satisfy all of TB, G' and tan δ and indicate the stable TB. On the other hand, the expectable improvement of the properties is not observed in the rubber compositions of Comparative Examples 6-8.

Moreover, when 15 parts by mass of SBR as the copolymer (B) (weight average molecular weight: 80,000 (styrene content (St)/vinyl bond content (Vi) = 65 mass%/65 mass%)) is included per 100 parts by mass of the copolymer (C): emulsion-polymerized SBR [#1500 made by JSR Corporation (weight average molecular weight of emulsion-polymerized SBR: 450,000) (St/Vi = 23.5 mass%/18 mass%)], the difference in aromatic vinyl compound content is 41.5 mass% and the storage modulus is improved at a ratio of 115/100 and the loss factor is lowered at a ratio of 105/100 and the fracture strength is lowered at a ratio of 90/100 as compared with the composition containing aromatic oil instead of the copolymer (B) (an index of the property is 100), but it is considered that there is a place for adding another proper means such as improvement of compatibility or the like.

### INDUSTRIAL APPLICABILITY

The rubber composition according to the invention can be produced by using usual starting materials such as styrene, butadiene and the like, and develops excellent predetermined performances by shaping into a tread portion or the like of a tire without damaging the operability such as milling or the like and has a versatility.

## Claims

1. A rubber composition **characterized by** containing a liquid aromatic vinyl compound-diene compound copolymer (B) having a weight average molecular weight of 50,000-300,000 (conversion to polystyrene through gel permeation chromatography) and a rubber component (A) comprising at least one rubber of natural rubber and synthetic diene-based rubbers in which the copolymer (B) comprises 5-80 mass % of the aromatic vinyl compound and a vinyl bond content in diene compound portion is 10-80 mass %; the rubber composition containing a softening agent and a total amount of the copolymer (B) and the softening agent is 5-60 parts by mass based on 100 parts by mass of the rubber component (A).

2. A rubber composition according to claim 1, wherein the rubber component (A) comprises not less than 50 mass % of a styrene-butadiene copolymer rubber.

3. A rubber composition according to claim 1 or 2, wherein the rubber component (A) contains not less than 50 mass % of a styrene-butadiene copolymer (C) having a weight average molecular weight of 300,000-1,500,000, and the copolymer (C) comprises 20-60 mass % of an aromatic vinyl compound and has a vinyl bond content in diene compound portion of 10-80 mass %, and the copolymer (B) comprises 10-70 mass % of an aromatic vinyl compound, and a difference in aromatic vinyl compound content between the copolymer (C) and the copolymer (B) is not more than 30 mass %.

4. A rubber composition according to claim 3, wherein the copolymer (C) is at least one or an emulsion-polymerized styrene-butadiene copolymer comprising not less than 20 mass % of an aromatic vinyl compound and a solution-polymerized styrene-butadiene copolymer comprising not less than 20 mass % of an aromatic vinyl compound and having a vinyl bond content in diene compound portion of not less than 10 mass %.

5. A rubber composition according to any one of claims 1 to 4, wherein the aromatic vinyl compound of the copolymer (B) is styrene.

6. A rubber composition according to any one of claims 1 to 5, wherein the diene compound of the copolymer (B) is butadiene.

7. A rubber composition according to any one of claims 1 to 6, wherein the copolymer (B) is a solution-polymerized styrene-butadiene copolymer rubber.

8. A rubber composition according to any one of claims 1 to 7, wherein the copolymer (B) has a weight average molecular weight of 50,000-200,000.

9. A rubber composition according to any one of claims 1 to 8, wherein the copolymer (B) has a weight average molecular weight of 50,000-150,000.

10. A rubber composition according to any one of claims 1 to 9, which further contains 30-90 parts by mass of a filler based on 100 parts by mass of the rubber component (A).

11. A rubber composition according to claim 10, wherein the filler is at least one of carbon black and silica.

12. A rubber composition according to claim 11, wherein the carbon black is SAF class to HAF class.

13. A pneumatic tire **characterized by** using a rubber composition as claimed in any one of claims 1 to 12 in at least ground contact part of a tread portion.

## Patentansprüche

1. Kautschukzusammensetzung, die **gekennzeichnet ist durch** Enthalten eines flüssigen aromatischen Vinylverbindung-Dienverbindungs-Copolymers (B), das ein gewichtsdurchschnittliches Molekulargewicht von 50.000-300.000 aufweist (Umwandlung in Polystyrol **durch** Gelpermeationschromatographie), und einer Kautschukkomponente (A), die mindestens einen Kautschuk von Naturkautschuk und synthetischen Kautschuken auf Dienbasis umfasst, wobei das Copolymer (B) 5-80 Masse-% der aromatischen Vinylverbindung umfasst und ein Vinylbindungsgehalt im Dienverbindungsanteil 10-80 Masse-% beträgt; wobei die Kautschukzusammensetzung ein Erweichungsmittel enthält und eine Gesamtmenge des Copolymers (B) und des Erweichungsmittels 5-60 Masseteile, auf 100 Masseteile der Kautschukkomponente (A) bezogen, beträgt.

2. Kautschukzusammensetzung nach Anspruch 1, wobei die Kautschukkomponente (A) nicht weniger als 50 Masse-% eines Styrol-Butadien-Copolymerkautschuks umfasst.

3. Kautschukzusammensetzung nach Anspruch 1 oder 2, wobei die Kautschukkomponente (A) nicht weniger als 50 Masse-% eines Styrol-Butadien-Copolymers (C) enthält, das ein gewichtsdurchschnittliches Molekulargewicht von 300.000-1.500.000 aufweist, und das Copolymer (C) 20-60 Masse-% einer aromatischen Vinylverbindung umfasst und einen Vinylbindungsgehalt im Dienverbindungsanteil von 10-80 Masse-% aufweist, und das Copolymer (B) 10-70 Masse-% einer aromatischen Vinylverbindung umfasst und ein Unterschied im aromatischen Vinylverbindungsgehalt zwischen dem Copolymer (C) und dem Copolymer (B) nicht mehr als 30 Masse-% beträgt.

4. Kautschukzusammensetzung nach Anspruch 3, wobei das Copolymer (C) mindestens eines von einem emulsionspolymerisierten Styrol-Butadien-Copolymer, das nicht weniger als 20 Masse-% einer aromatischen Vinylverbindung umfasst, und einem lösungspolymerisierten Styrol-Butadien-Copolymer ist, das nicht weniger als 20 Masse-% einer aromatischen Vinylverbindung umfasst und einen Vinylbindungsgehalt im Dienverbindungsanteil von nicht weniger als 10 Masse-% aufweist.

5. Kautschukzusammensetzung nach einem der Ansprüche 1 bis 4, wobei die aromatische Vinylverbindung des Copolymers (B) Styrol ist.

6. Kautschukzusammensetzung nach einem der Ansprüche 1 bis 5, wobei die Dienverbindung des Copolymers (B) Butadien ist.

7. Kautschukzusammensetzung nach einem der Ansprüche 1 bis 6, wobei das Copolymer (B) ein lösungspolymerisierter Styrol-Butadien-Copolymer-Kautschuk ist.

8. Kautschukzusammensetzung nach einem der Ansprüche 1 bis 7, wobei das Copolymer (B) ein gewichtsdurchschnittliches Molekulargewicht von 50.000-200.000 aufweist.

9. Kautschukzusammensetzung nach einem der Ansprüche 1 bis 8, wobei das Copolymer (B) ein gewichtsdurchschnittliches Molekulargewicht von 50.000-150.000 aufweist.

10. Kautschukzusammensetzung nach einem der Ansprüche 1 bis 9, die ferner 30-90 Masseteile eines Füllstoffs, auf 100 Masseteile der Kautschukkomponente (A) bezogen, enthält.

11. Kautschukzusammensetzung nach Anspruch 10, wobei der Füllstoff mindestens einer von Ruß und Siliciumdioxid ist.

12. Kautschukzusammensetzung nach Anspruch 11, wobei der Ruß zur SAF-Klasse bis HAF-Klasse gehört.

13. Luftreifen, der durch Verwenden einer Kautschukzusammensetzung nach einem der Ansprüche 1 bis 12 in mindestens dem mit dem Boden in Kontakt kommenden Teil eines Reifenprofilabschnitts gekennzeichnet ist.

## Revendications

1. Composition de caoutchouc **caractérisée en ce qu'**elle contient un copolymère liquide de composé de vinyle aromatique-composé diène (B) ayant un poids moléculaire moyen en poids de 50 000 à 300 000 (conversion en polystyrène par chromatographie par perméation sur gel) et un composant de caoutchouc (A) comprenant au moins un caoutchouc de caoutchouc naturel et de caoutchoucs à base de diène synthétiques dans lesquels le copolymère (B) comprend de 5 à 80 % en masse du composé de vinyle aromatique et une teneur en liaisons vinyliques dans la portion composé diène est de 10 à 80 % en masse; la composition de caoutchouc contenant un agent de ramollissement et une quantité totale du copolymère (B) et l'agent de ramollissement est de 5 à 60 parties en masse sur la base de 100 parties en masse du composant de caoutchouc (A).

2. Composition de caoutchouc selon la revendication 1, où le composant de caoutchouc (A) ne comprend pas moins de 50 % en masse d'un caoutchouc copolymère de styrène-butadiène.

3. Composition de caoutchouc selon la revendication 1 ou 2, où le composant de caoutchouc (A) ne contient pas moins de 50 % en masse d'un copolymère de styrène-butadiène (C) ayant un poids moléculaire moyen en poids de 300 000 à 1 500 000, et le copolymère (C) comprend de 20 à 60 % en masse d'un composé de vinyle aromatique et présente une teneur en liaisons vinyliques dans la portion composé diène de 10 à 80 % en masse, et le copolymère (B) comprend de 10 à 70 % en masse d'un composé de vinyle aromatique, et une différence dans la teneur du composé de vinyle aromatique entre le copolymère (C) et le copolymère (B) n'est pas supérieure à 30 % en masse.

4. Composition de caoutchouc selon la revendication 3, où le copolymère (C) est au moins l'un d'un copolymère de styrène-butadiène polymérisé en émulsion comprenant pas moins de 20 % en masse d'un composé de vinyle aromatique et d'un copolymère de styrène-butadiène polymérisé en solution comprenant pas moins de 20 % en masse d'un composé de vinyle aromatique et ayant une teneur en liaisons vinyliques dans la portion composé diène non inférieure à 10 % en masse.

5. Composition de caoutchouc selon l'une quelconque des revendications 1 à 4, où le composé de vinyle aromatique du copolymère (B) est le styrène.

6. Composition de caoutchouc selon l'une quelconque des revendications 1 à 5, où le composé diène du copolymère (B) est le butadiène.

7. Composition de caoutchouc selon l'une quelconque des revendications 1 à 6, où le copolymère (B) est un caoutchouc copolymère de styrène-butadiène polymérisé en solution.

8. Composition de caoutchouc selon l'une quelconque des revendications 1 à 7, où le copolymère (B) présente un poids moléculaire moyen en poids de 50 000 à 200 000.

9. Composition de caoutchouc selon l'une quelconque des revendications 1 à 8, où le copolymère (B) présente un poids moléculaire moyen en poids de 50 000 à 150 000.

10. Composition de caoutchouc selon l'une quelconque des revendications 1 à 9, qui contient en outre de 30 à 90 parties en masse d'une charge sur la base de 100 parties en masse du composant de caoutchouc (A).

11. Composition de caoutchouc selon la revendication 10, où la charge est au moins l'une parmi un noir de carbone et la silice.

12. Composition de caoutchouc selon la revendication 11, où le noir de carbone est de la classe SAF à la classe HAF.

13. Bandage pneumatique **caractérisé par** l'utilisation d'une composition de caoutchouc telle que revendiquée selon l'une quelconque des revendications 1 à 12 dans au moins une partie de contact avec le sol d'une partie de bande de roulement.
